# EUROPEAN PATENT SPECIFICATION

(11) **EP 4 036 432 B1**
(45) Date of publication and mention of the grant of the patent: **31.12.2025**
(21) Application number: 22154090.9
(22) Date of filing: 28.01.2022
(51) Int. Cl.: F16D 66/02, G01B 7/02

(54) **BRAKE PAD WEAR LEVEL MONITORING**
BREMSBELAGVERSCHLEISSGRADÜBERWACHUNG
SURVEILLANCE DE NIVEAU D'USURE DE PLAQUETTES DE FREIN

(30) Priority: 29.01.2021 US 202163143251 P
(43) Date of publication of application: 03.08.2022
(73) Proprietor: Sensata Technologies, Inc., Attleboro, MA 02703 (US)
(72) Inventor: HEEDER, NICHOLAS, ATTLEBORO, 02703 (US); ALHASSAN, NASHIRU, ATTLEBORO,, 02703 (US); BALASUBRAMANIAN, ADITYA, ATTLEBORO, 02703 (US); DUFFY, MARK, ATTLEBORO,, 02703 (US); MOLYNEAUX, NEVIN, ATTLEBORO, 02703 (US)
(74) Representative: FRKelly

(56) References cited:
- EP-A1- 3 670 279
- DE-A1- 4 212 279
- US-A1- 2019 264 764
- US-A1- 2020 180 587
- US-B1- 6 257 374

## Description

### CROSS-REFERENCE TO RELATED APPLICATIONS

This application is a non-provisional application for patent entitled to a filing date and claiming the benefit of earlier-filed U.S. Provisional Patent Application Serial No. 63/143,251, filed January 29, 2021.

### BACKGROUND

Without a sensor for determining the wear of a brake pad, drivers are forced to remove one or more tires from their vehicle to determine the level of wear on their brake pads. The typical current market application for brake pad wear sensing consists of a device that indicates when the pad has sufficient wear to warrant replacement. The "sensor" typically consists of a wire that is broken when the pad wear reaches the point of the sensor causing the wire to be consumed during the braking process and leading to an open circuit. The open circuit is then used to indicate a light on the vehicle dash indicating that the brake pads need replacing. The sensor is consumed during the operational life of the brake pads and must be replaced when the brake pads are replaced at additional owner cost. Further, the wire harness for the brake pad wear sensor described above must be included in the vehicle architecture. This includes the complicated routing of a wire in the moving wheel suspension system as well as consuming connection points on vehicle system modules for the data acquisition.

US 2019/264764 A1 describes a brake pad wear measuring system for measuring brake pad wear for a vehicle disc brake system includes an inductive sensor operable to create a magnetic field and a target. At least one of the sensor and the target are mounted for movement along a braking axis with a component of the disc brake system. The positions of the sensor and target relative to each other changes in response to application of the disc brake system. The distance that the sensor and target move relative to each other in response to application of the disc brake system increases an amount that is equal to the total wear of the inner and outer brake pads. The sensor is responsive to the change in inductance caused by movement of the target in the magnetic field to provide a signal indicative of brake pad wear.

US 2020/180587 A1 describes a brake pad wear measuring system for measuring brake pad wear for a vehicle disc brake system includes a first coil having a first coil face and is excitable to create a first magnetic field. A first target is spaced a fixed distance from the first coil face. The first coil and the first target are configured for movement relative to each other in response to application of the disc brake system so that the first target covers a portion of the first coil that varies with the amount of brake pad wear and varies the inductance of the first coil. The inductance of the first coil is indicative of the amount of brake pad wear. The brake pad wear measuring system also includes a second coil having a second coil face and is excitable to create a second magnetic field. A second target is configured to move toward the second coil face in response to application of the disc brake system so that the distance between the second target and the second coil face varies with the amount of brake pad wear and varies the inductance of the second coil. The inductance of the second coil is indicative of the amount of brake pad wear.

DE 42 12279 A1 relates to a wear monitor for a disc brake. EP 3 670 279 relates to a position sensing system and method for a braking assembly for a vehicle. US6257374B1 discloses a vehicle brake system having a rotor rotatable about an axis and a pad moveable parallel to the axis to engage the rotor for creating braking force. A brake pad wear sensing system for the vehicle brake system includes a magnet that provides a magnetic field. A Hall effect sensor senses the magnetic field and outputs an electrical signal indicative of the sensed magnetic field. Means mounts one of the magnet and the sensor with the pad for movement parallel to the axis. Means mounts the other of the magnet and the sensor at a location along the axis such that the signal from the sensor is indicative of pad wear.

### SUMMARY

The invention is set out in the appended set of claims. In particular, the invention is set out by an apparatus for brake pad wear level monitoring according to claim 1 and by a method of brake pad wear level monitoring according to claim 5.

In another embodiment not encompassed by the present set of claims, the apparatus includes a computer processor coupled to a non-transitory computer readable storage medium that includes computer program instructions that when executed by the computer processor cause the apparatus to carry out the operations of: receiving, by a wear level monitor, transmission data from a sensor module attached to a fixed position of a braking system; and using, by the wear level monitor, the transmission data to determine a wear level of a brake pad of the braking system.

An advantage of brake pad wear level monitoring in accordance with one or more embodiments of the present disclosure is that the current state of the wear level of the brake pad may be identified without the need for removing a wheel of the vehicle. Another advantage of the sensor module described in the present disclosure is that the sensor module may be easily integrated with existing braking systems and is not required to be removed when the user changes their brakes.

Furthermore, by continually monitoring the relative distance between the sensor module and the sensor target, the sensor module may regularly track and provide outputs to a driver or vehicle system regarding the current brake pad wear level. Regular updates regarding brake pad wear may enable a driver or vehicle system to stay informed about the current state of the brake pad wear. As will be explained further below, a system that continually monitors brake pad wear level is an improvement over the prior monitoring sensors. In addition, the generated wear level monitoring data may also be useful for vehicle manufacturers and dealerships. For example, a vehicle manufacturer or dealer may use the monitoring data to better time incentives offered to the vehicle owner. Furthermore, continually monitoring brake pad wear can be useful to diagnose brake faults that cause premature pad wear, such as a sticky caliper/piston.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF DRAWINGS

FIG. 1 illustrates a braking system configured for brake pad wear level monitoring according to at least one embodiment of the present invention;
FIG. 2A illustrates a sensor module of a brake pad wear level monitoring sensor according to at least one embodiment of the present invention;
FIG. 2B illustrates a sensor target of a brake pad wear level monitoring sensor according to at least one embodiment of the present invention;
FIG. 3A illustrates a block diagram of a sensor module configured for brake pad wear level monitoring in accordance with at least one embodiment of the present invention;
FIG. 3B illustrates a block diagram of an external device configured for brake pad wear level monitoring in accordance with at least one embodiment not falling within the scope of the present invention;
FIG. 4 is a flowchart of an example method for brake pad wear level monitoring in accordance with at least one embodiment of the present invention;
FIG. 5 is a flowchart of an example method for brake pad wear level monitoring in accordance with at least one embodiment of the present invention;
FIG. 6 is a flowchart of an example method for brake pad wear level monitoring in accordance with at least one embodiment of the present invention;
FIG. 7 is a flowchart of an example method for brake pad wear level monitoring in accordance with at least one embodiment of the present invention;
FIG. 8 is a flowchart of an example method for brake pad wear level monitoring in accordance with at least one embodiment of the present invention;
FIG. 9 is a flowchart of an example method for brake pad wear level monitoring in accordance with at least one embodiment of the present invention;
FIG. 10 is a flowchart of an example method for brake pad wear level monitoring in accordance with at least one embodiment of the present invention;
FIG. 11 is a flowchart of an example method for brake pad wear level monitoring in accordance with at least one embodiment of the present invention;
FIG. 12 is a flowchart of an example method for brake pad wear level monitoring in accordance with at least one embodiment of the present invention;
FIG. 13 is a flowchart of an example method for brake pad wear level monitoring in accordance with at least one embodiment of the present invention;
FIG. 14 is a flowchart of an example method for brake pad wear level monitoring in accordance with at least one embodiment not falling within the scope of the present invention; and
FIG. 15 is a flowchart of an example method for brake pad wear level monitoring in accordance with at least one embodiment not falling within the scope of the present invention.

### DESCRIPTION OF EMBODIMENTS

The terminology used herein for the purpose of describing particular examples is not intended to be limiting for further examples. Whenever a singular form such as "a", "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

It will be understood that when an element is referred to as being "connected" or "coupled" to another element, the elements may be directly connected or coupled via one or more intervening elements. If two elements A and B are combined using an "or", this is to be understood to disclose all possible combinations, i.e., only A, only B, as well as A and B. An alternative wording for the same combinations is "at least one of A and B". The same applies for combinations of more than two elements.

As will be discussed in greater detail below, embodiments of the present invention include a wireless brake pad wear sensor (WBPWS) configured to measure brake pad wear on fixed-opposed piston caliper systems.

The details of one or more example implementations are set forth in the accompanying drawings and the description below. Other possible example features and/or possible example advantages will become apparent from the description, the drawings, and the claims. Some implementations may not have those possible example features and/or possible example advantages, and such possible example features and/or possible example advantages may not necessarily be required of some implementations.

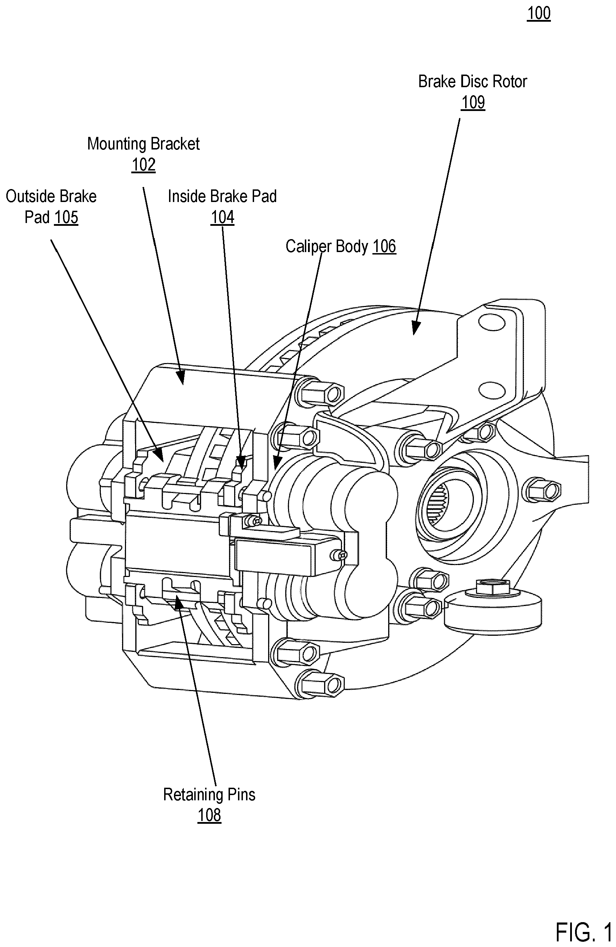

Exemplary methods, apparatuses, and computer program products for brake pad wear level monitoring in accordance with several embodiments are described with reference to the accompanying drawings, beginning with FIG. 1. FIG. 1 sets forth a brake system (100) configured for brake pad wear level monitoring according to at least one embodiment of the present invention. In the example of FIG. 1, the brake system (100) is a fixed-opposed piston caliper brake system, but readers of skill in the art will realize that any number of alternative brake system configurations may utilize brake pad wear level monitoring in accordance with embodiments of the present invention.

During typical operation of disc brake system, a caliper is fed brake fluid by a brake fluid line (not pictured), which drives all pistons within the caliper forward, causing both an inside brake pad (104) and an outside brake pad (105) to move along retainer pins (108) towards the disc rotor (109). In this example fixed-opposed caliper brake system (100), a caliper body (106) and a mount bracket (102) remain stationary at all times. Contact between the brake disc rotor (109) and the brake pads (104, 105) will cause the brake pads (104, 105) to wear down.

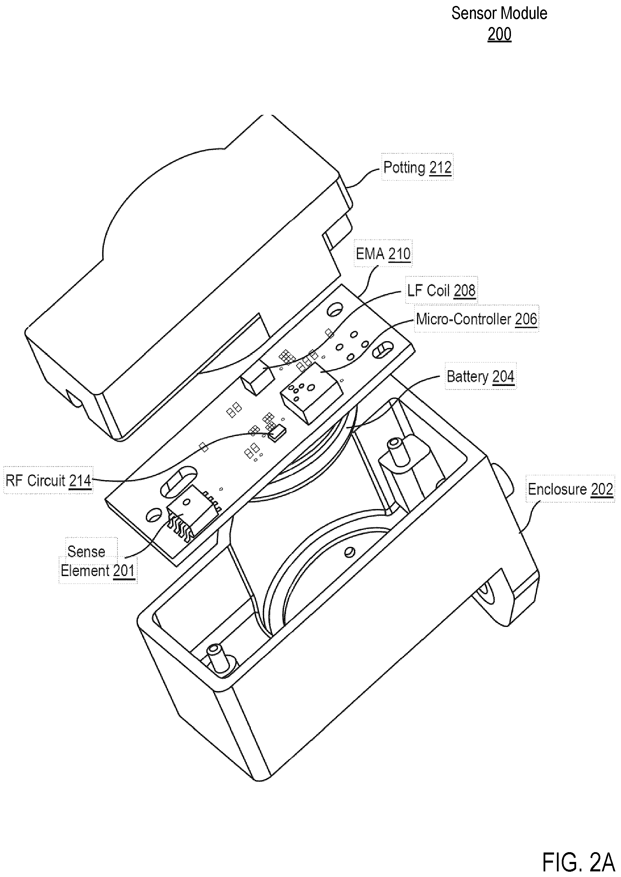

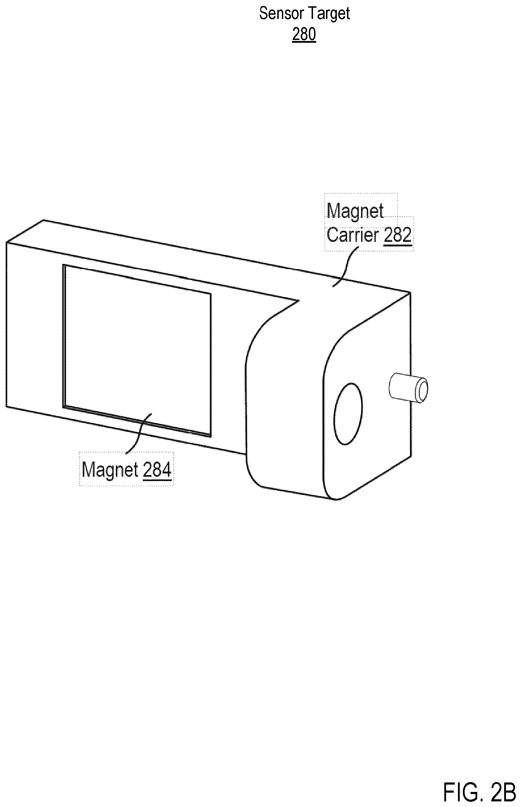

To determine and monitor the wear level of the brake pad, a brake pad wear level monitoring sensor is attached to a caliper body/housing (106) of the brake system. A brake pad wear level monitoring sensor includes a sensor module and a sensor target. For further explanation, FIG. 2A sets forth an example sensor module (200) of a brake pad wear level monitoring sensor and FIG. 2B sets forth an example sensor target (280) of a brake pad wear level monitoring sensor. The sensor target (280) includes a magnet (284) within a magnet carrier (282). The sensor target (280) is configured to be coupled to a moveable component of the brake system, such as a brake pad backing plate or brake pad (e.g., brake pads (104, 105) of FIG. 1).

The sensor module (200) of FIG. 2A includes a sense element (201) attached to a Electronic Module Assembly (EMA) (210) having printed circuit board (PCB) with a LF coil (208), a micro-controller (206), an RF circuit (214), and a battery (204). The EMA (210) is encased by an enclosure (202) and a potting (212). The sensor module (200) is configured to be attached to the caliper body/housing (106) of FIG. 1.

The sense element (201) is configured to generate data indicative of a relative distance between the sensor module and the sensor target. Examples of a sense element include but are not limited to a magneto resistive element, an inductive element, or two or more low-power resistive bridge elements in a wheatstone configuration. In the invention, the sense element (201) is a magneto resistive sense element and it is configured to detect a strength of the magnetic field of the magnet (284) of the sensor target (280) and generate a signal indicating the strength of the magnetic field and thus the relative distance between the sensor module and the sensor target. In this embodiment, the micro-controller (206) uses this data indicating the relative distance between the sensor module and the sensor target to generate transmission data.

In the invention, the sensor module uses the generated data to determine a wear level of the brake pad. For example, the sensor module may use a data structure that correlates relative distance between the sensor module and the sensor target to brake pad wear. In this embodiment, the transmission data includes an indication of the determined wear level of the brake pad. Alternatively, according to an embodiment not forming part of the claimed invention, the sensor module may transmit position data as transmission data without determining a wear level of the brake pad. In this embodiment, the external device may utilize the position data in the transmission data to determine a wear level of the brake pad.

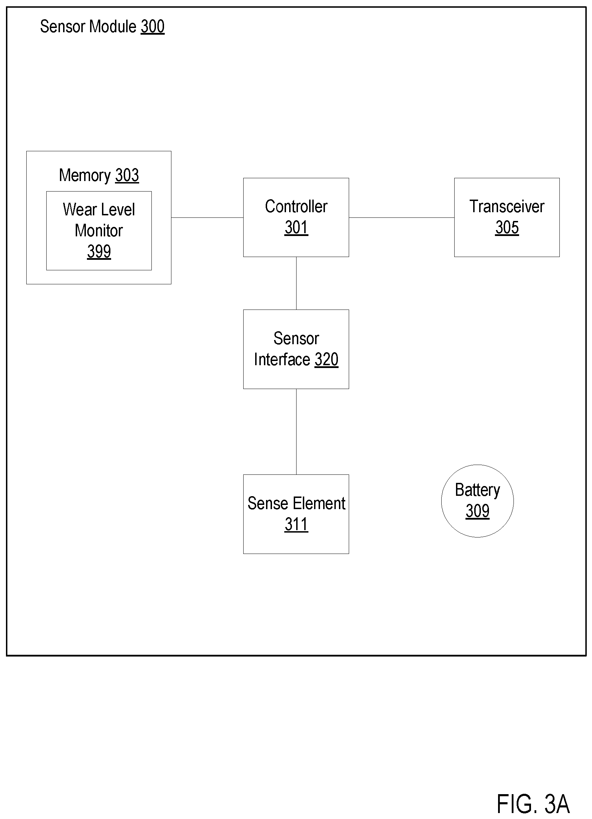

For further explanation, FIG. 3A sets forth a block diagram of a sensor module (300) configured for brake pad wear level monitoring in accordance with at least one embodiment of the present invention. The sensor module (300) includes a battery (309) and a controller (301) coupled to memory (303), a transceiver (305), and a sensor interface (320) for connecting to a sense element (311).

In the example of FIG. 3A, the memory (303) includes a wear level monitor (399) having computer program instructions that when executed by the controller (301) cause the controller (301) to carry out the operations of generating data indicative of a relative distance between the sensor module and a sensor target attached to a brake pad; using the generated data to generate transmission data; and transmit the generated transmission data to an external device.

In a particular embodiment, the wear level monitor (399) may also include computer program instructions that when executed by the controller (301) cause the controller (301) to carry out the operations of receiving from the sense element (311) data indicative of a relative distance between the sensor module and a sensor target attached to a brake pad; and using the received data to determine a wear level of the brake pad.

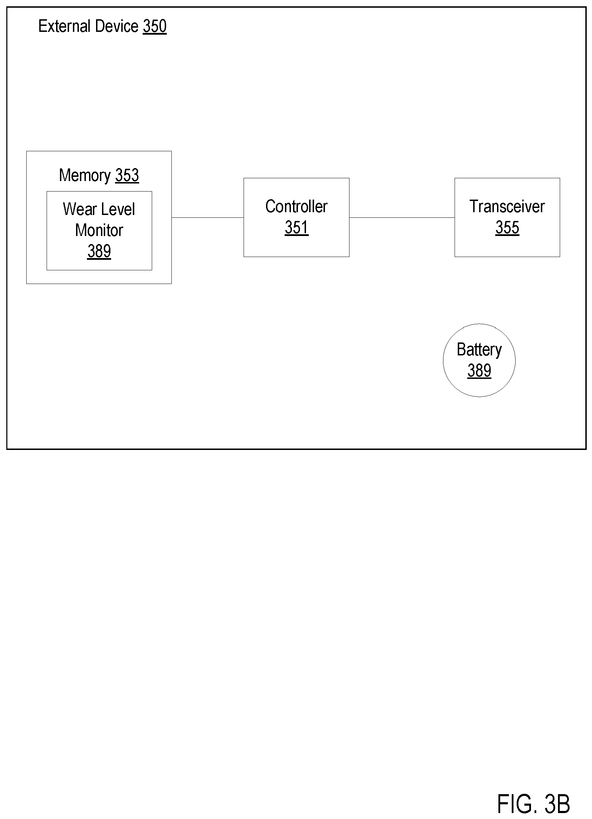

For further explanation, FIG. 3B sets forth a block diagram of an external device (350) configured for brake pad wear level monitoring in accordance with at least one embodiment not falling within the scope of the present invention. Examples of external devices that may be configured to receive the transmitted wear level include but are not limited to an electronic control module (ECM) of a vehicle; a mobile device; and a diagnostic tool. The external device (350) includes a battery (389) and a controller (351) coupled to memory (353) and a transceiver (355).

In the example of FIG. 3B, the memory (353) includes a wear level monitor (389) having computer program instructions that when executed by the controller (351) cause the controller (351) to carry out the operations of receiving, by the wear level monitor (389), transmission data from a sensor module (e.g., the sensor module (300) of FIG. 3) attached to a fixed position of a braking system; and using, by the wear level monitor (389), the transmission data to determine a wear level of a brake pad of the braking system.

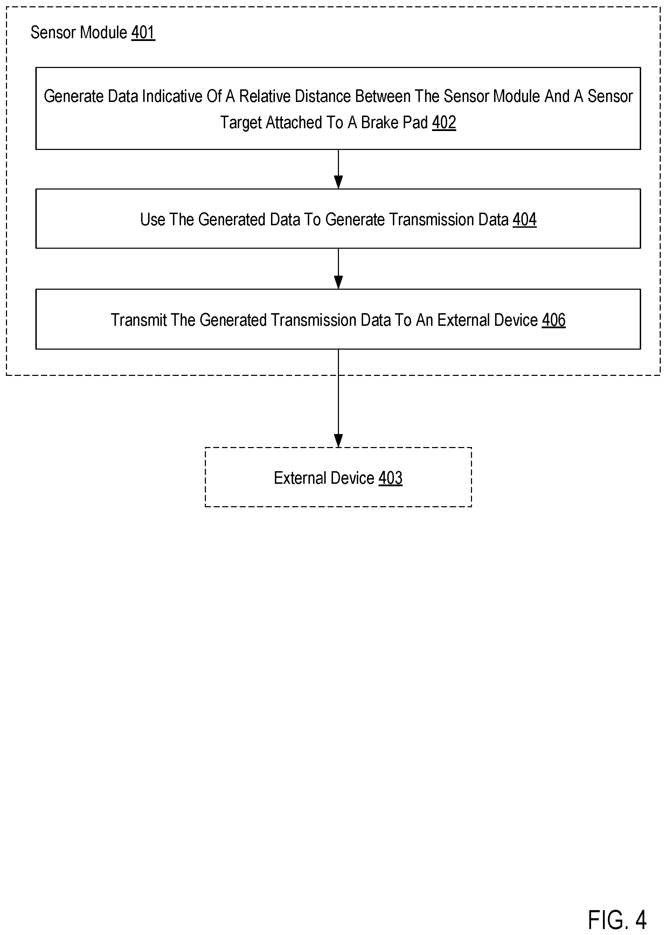

For further explanation, FIG. 4 sets forth a flowchart of an example method for brake pad wear level monitoring in accordance with at least one embodiment of the present invention. The method of FIG. 4 includes generating (402), by a sensor module (401) attached to a fixed portion of a braking system, data indicative of a relative distance between the sensor module and a sensor target attached to a brake pad. Generating (402), by a sensor module (401) attached to a fixed portion of a braking system, data indicative of a relative distance between the sensor module and a sensor target attached to a brake pad may be carried out by using the sense element to measure a magnetic field of a magnet in a sensor target.

The method of FIG. 4 also includes using (404), by the sensor module (401), the generated data to generate transmission data. Examples of transmission data include but are not limited to position data, such as the generated data indicative of the relative distance between the sensor module and the sensor target; a modified/converted form of the generated data; or data that is otherwise based on the generated data. In a particular embodiment, the sensor module may use the generated data to determine a wear level of the brake pad. For example, the sensor module may use a data structure that correlates relative distance between the sensor module and the sensor target to brake pad wear. In this embodiment, the transmission data may include an indication of the determined wear level of the brake pad.

In addition, the method of FIG. 4 also includes transmitting (406), by the sensor module, the generated transmission data to an external device. As used in this application, an external device may be any device that is external to the sensor module and capable of receiving the transmitted wear level. Examples of external devices that may be configured to receive the transmitted wear level include but are not limited to an electronic control module (ECM) of a vehicle; a mobile device; and a diagnostic tool. Transmitting (406), by the sensor module, the generated transmission data to an external device may be carried out by utilizing a wirelessly radio frequency (RF) transmitter to broadcast a signal that includes the generated transmission data.

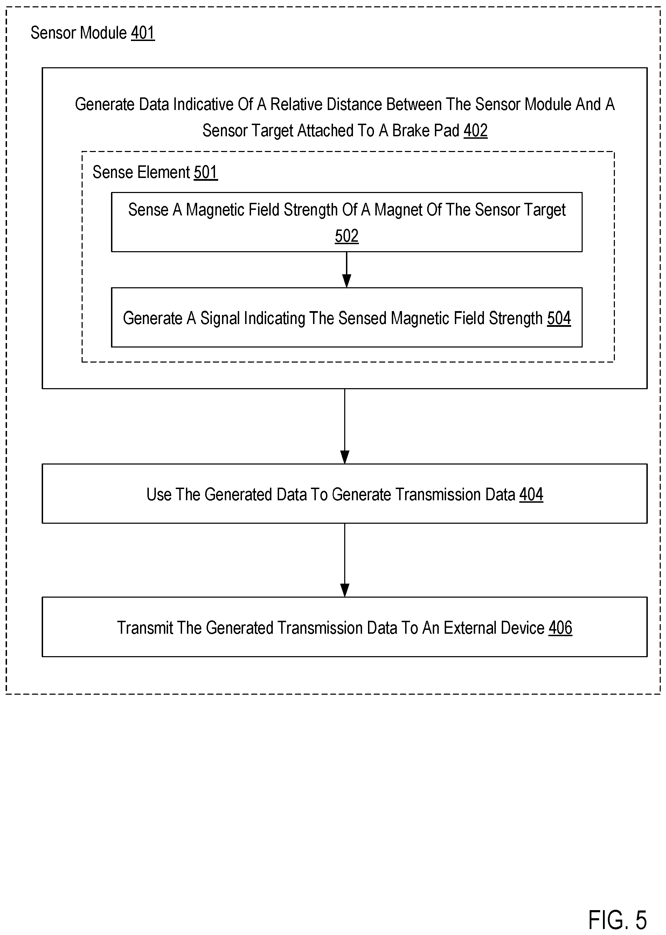

For further explanation, FIG. 5 sets forth a flowchart of an example method for brake pad wear level monitoring in accordance with at least one embodiment of the present invention. The method of FIG. 5 includes the elements of FIG. 4. In the method of FIG. 5, generating (402) data indicative of a relative distance between the sensor module and a sensor target attached to a brake pad includes sensing (502), by a sense element (501) of the sensor module, a magnetic field strength of a magnet of the sensor target attached to the brake pad. Sensing (502), by a sense element (501) of the sensor module, a magnetic field strength of a magnet of the sensor target attached to the brake pad may be carried out by determining a change in resistance of a magneto resistive element.

In the method of FIG. 5, generating (402) data indicative of a relative distance between the sensor module and a sensor target attached to a brake pad includes generating (504), by the sense element (501), a signal indicating the sensed magnetic field strength. Generating (504), by the sense element (501), a signal indicating the sensed magnetic field strength may be carried out by translating the measurement of the magnetic field into a digital signal for transmission to a micro-controller or processor.

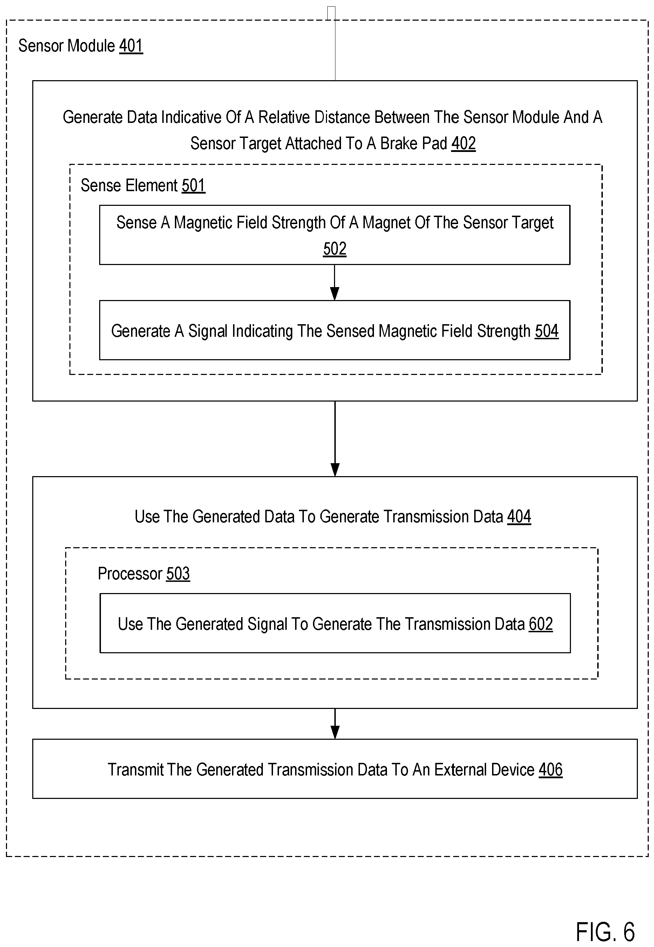

For further explanation, FIG. 6 sets forth a flowchart of an example method for brake pad wear level monitoring in accordance with at least one embodiment of the present invention. The method of FIG. 6 includes the elements of FIG. 5. In the method of FIG. 6, using (404) the generated data to generate transmission data includes using (602) the generated signal to generate the transmission data. Using (602), by a processor (601) of the sensor module (401), the signal to determine the wear level of the brake pad may be carried out by converting the generated signal into a form of data for transmission; using information from the signal to lookup or correlate the information to a wear level.

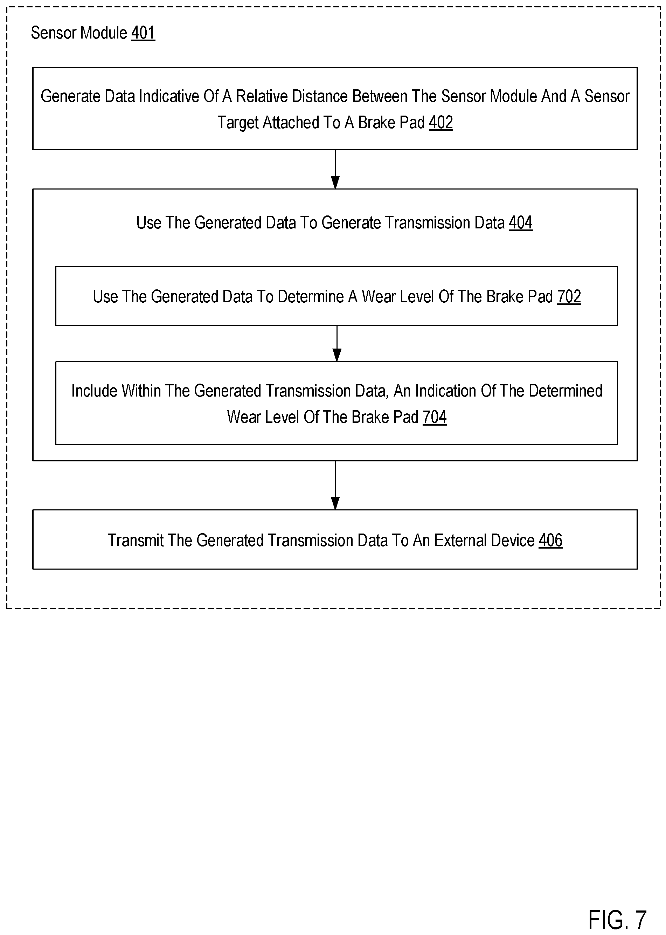

For further explanation, FIG. 7 sets forth a flowchart of an example method for brake pad wear level monitoring in accordance with at least one embodiment of the present invention. The method of FIG. 7 includes the elements of FIG. 4. In the method of FIG. 7, using (402) the generated data to generate transmission data includes using (702) the generated data to determine a wear level of the brake pad. Using (702) the generated data to determine a wear level of the brake pad may be carried out by using a data structure that correlates relative distance between the sensor module and the sensor target to brake pad wear.

In addition, in the example of FIG. 7, using (402) the generated data to generate transmission data includes including (704) within the generated transmission data, an indication of the determined wear level of the brake pad. Including (704) within the generated transmission data, an indication of the determined wear level of the brake pad may be carried out by including the determined wear level in the transmission data; and converting or otherwise modifying the determined wear level into an indication of the determined wear level that is included in the generated transmission data.

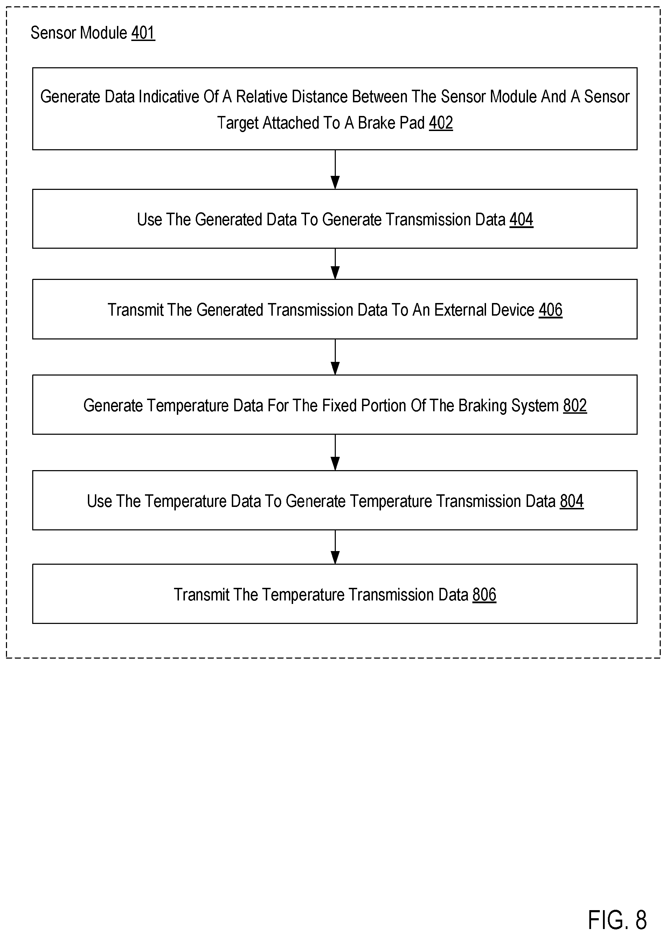

For further explanation, FIG. 8 sets forth a flowchart of an example method for brake pad wear level monitoring in accordance with at least one embodiment of the present invention. The method of FIG. 8 includes generating (802) temperature data for the fixed portion of the braking system. Generating (802) temperature data for the fixed portion of the braking system may be carried out by receiving temperature data from a temperature sensor that is part of the sensor module or coupled to the sensor module. Because the sensor module is coupled to a fixed portion of the braking system, the temperature data may be indicative of a temperature of the fixed portion of the braking system.

In addition, the method of FIG. 8 includes using (804) the temperature data to generate temperature transmission data. Examples of transmission data include but are not limited to temperature data, such as the generated temperature data; a modified/converted form of the generated temperature data; or data that is otherwise based on the generated temperature data. Using (804) the temperature data to generate temperature transmission data may be carried out by including the temperature data in the temperature transmission data; and converting or otherwise modifying the temperature data to generate the temperature transmission data.

The method of FIG. 8 also includes transmitting (806) the temperature transmission data. Transmitting (806) the temperature transmission data may be carried out by utilizing a wirelessly radio frequency (RF) transmitter to broadcast a signal that includes the temperature transmission data. In a particular embodiment, an external device, such as the external device (350) of FIG. 3B may be configured to receive and process both the temperature transmission data and the transmission data. In another embodiment, a first set of one or more external devices may be configured to receive and process the transmission data and a second set of one or more external devices may be configured to receive and process the temperature transmission data.

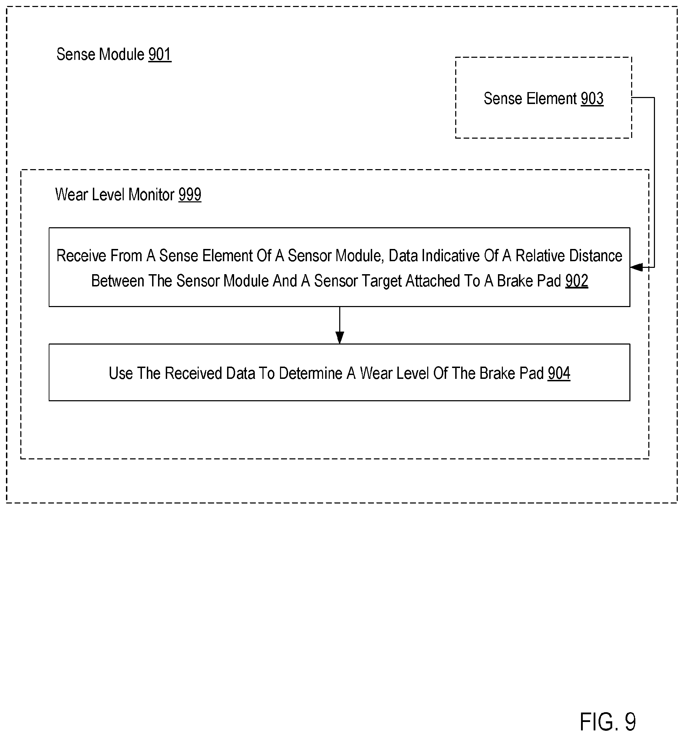

For further explanation, FIG. 9 sets forth a flowchart of an example method for brake pad wear level monitoring in accordance with at least one embodiment of the present invention. The method of FIG. 9 includes receiving (902) from a sense element (903) of a sensor module (901), by a wear level monitor (999) of the sensor module (901), data indicative of a relative distance between the sensor module and a sensor target attached to a brake pad. Receiving (902) from a sense element (903) of a sensor module (901), by a wear level monitor (999) of the sensor module (901), data indicative of a relative distance between the sensor module and a sensor target attached to a brake pad may be carried out by receiving data that measures a magnetic field of a magnet in a sensor target.

In addition, the method of FIG. 9 also includes using (904), by the wear level monitor (999), the generated data to determine a wear level of the brake pad. Using (904), by the wear level monitor (999), the generated data to determine a wear level of the brake pad may be carried out by using a data structure that correlates relative distance between the sensor module and the sensor target to brake pad wear.

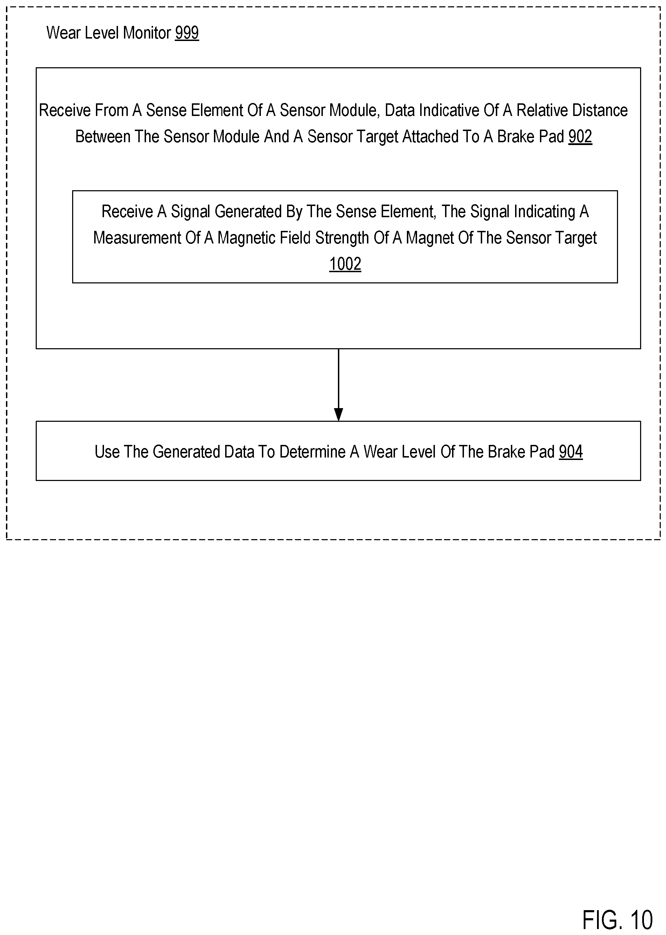

For further explanation, FIG. 10 sets forth a flowchart of an example method for brake pad wear level monitoring in accordance with at least one embodiment of the present invention. The method of FIG. 10 includes elements of FIG. 9. In the method of FIG. 10, receiving (902) from a sense element (903) of a sensor module (901), by a wear level monitor (999) of the sensor module (901), data indicative of a relative distance between the sensor module and a sensor target attached to a brake pad includes receiving a signal generated by the sense element, the signal indicating a measurement of a magnetic field strength of a magnet of the sensor target. Receiving a signal generated by the sense element, the signal indicating a measurement of a magnetic field strength of a magnet of the sensor target may be carried out by receiving data indicating a change in resistance of a magneto resistor within the sense element.

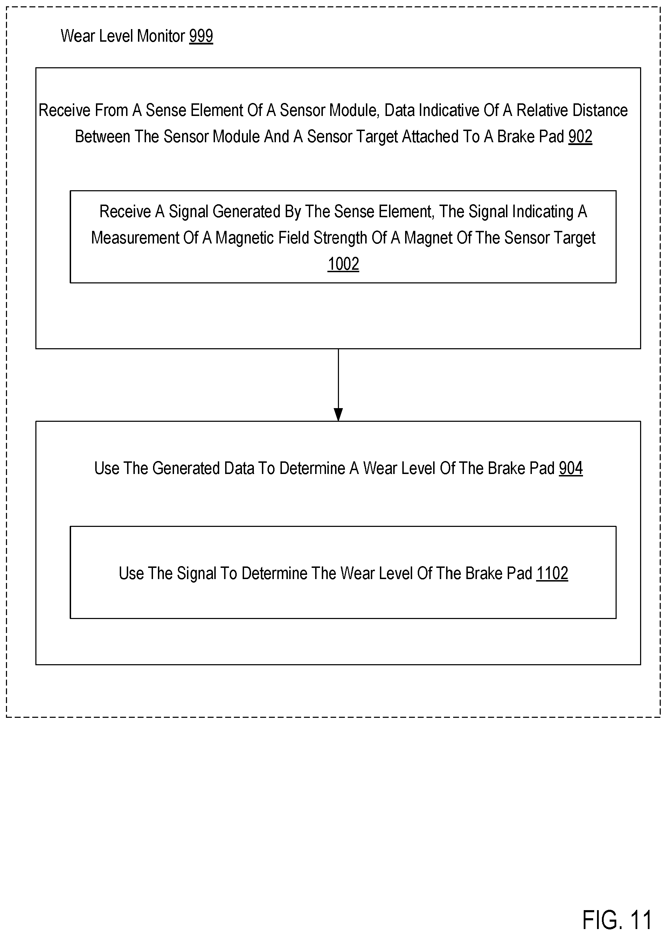

For further explanation, FIG. 11 sets forth a flowchart of an example method for brake pad wear level monitoring in accordance with at least one embodiment of the present invention. The method of FIG. 11 includes elements of FIG. 10. In the method of FIG. 11, using (904) the generated data to determine a wear level of the brake pad includes using (1102) the signal to determine the wear level of the brake pad. Using (1102) the signal to determine the wear level of the brake pad may be carried out by using information from the signal to lookup or correlate to a wear level.

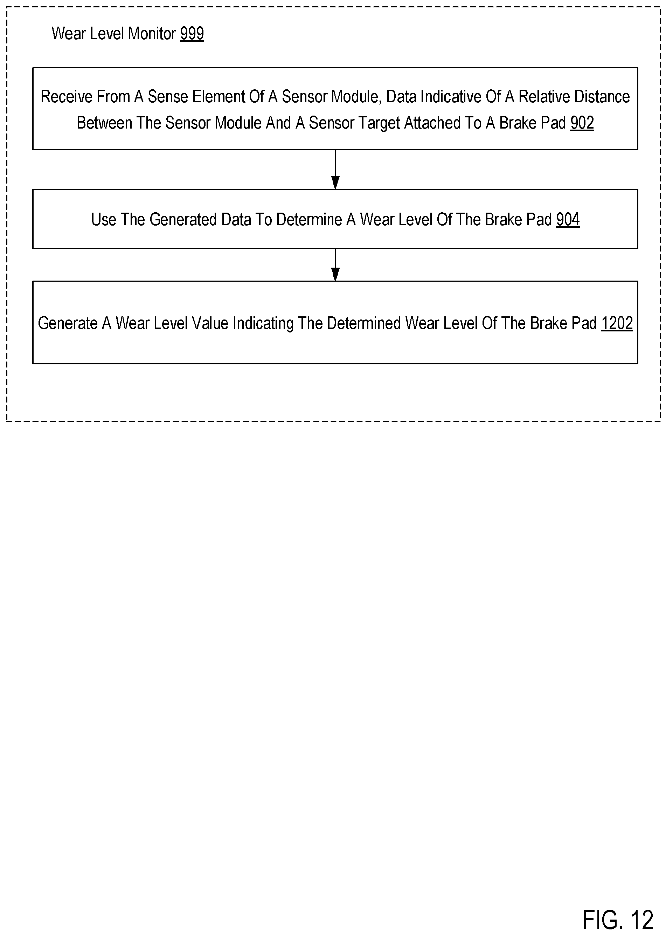

For further explanation, FIG. 12 sets forth a flowchart of an example method for brake pad wear level monitoring in accordance with at least one embodiment of the present invention. The method of FIG. 12 includes elements of FIG. 9. In addition, the method of FIG. 12 also includes generating (1202), by the wear level monitor (999), a wear level value indicating the determined wear level of the brake pad. Generating (1202), by the wear level monitor (999), a wear level value indicating the determined wear level of the brake pad may be carried out by converting the determined wear level to a wear level value for transmitting or outputting.

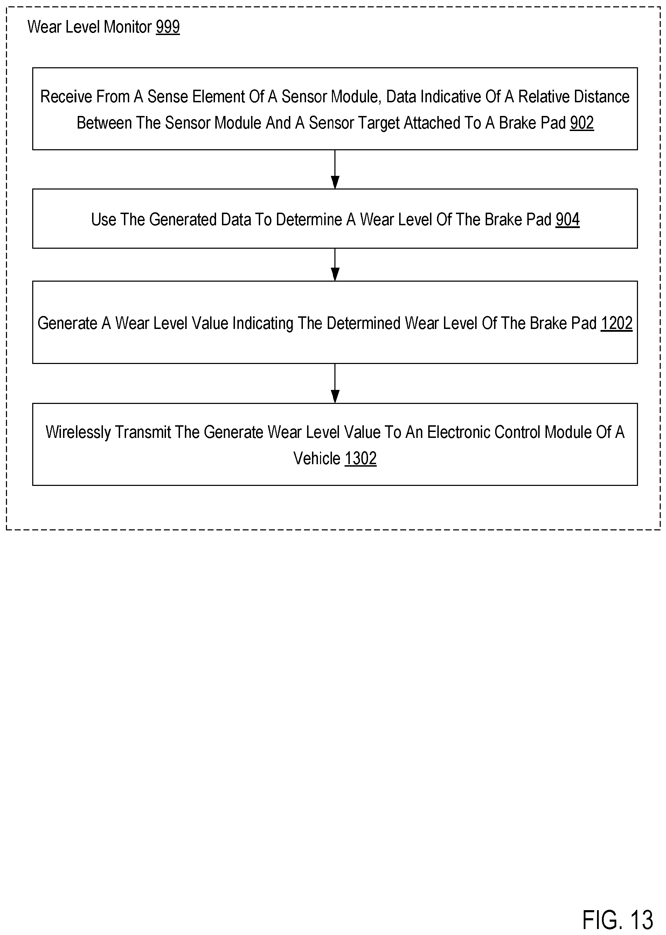

For further explanation, FIG. 13 sets forth a flowchart of an example method for brake pad wear level monitoring in accordance with at least one embodiment of the present invention. The method of FIG. 13 includes elements of FIG. 9. In addition, the method of FIG. 13 also includes wirelessly transmitting (1302), by the wear level monitor (999), the generated wear level value to an electronic control module of a vehicle. Wirelessly transmitting (1302), by the wear level monitor (999), the generated wear level value to an electronic control module of a vehicle may be carried out by utilizing a wirelessly radio frequency (RF) transmitter to broadcast a signal that includes the data associated with the generated wear level value.

In a particular embodiment, an ECU is configured to control one or more vehicle subsystems. Commonly referred to as the vehicle's "computers", an ECU may be a vehicle subsystem control units, such as an Engine Control Module (ECM), a Powertrain Control Module (PCM), a Transmission Control Module (TCM), a Brake Control Module (BCM), a Central Timing Module (CTM), a General Electronic Module (GEM), a Suspension Control Module (SCM). In a particular embodiment, the ECU may be considered a Vehicle Control Unit (VCU) that controls one or more other ECUs.

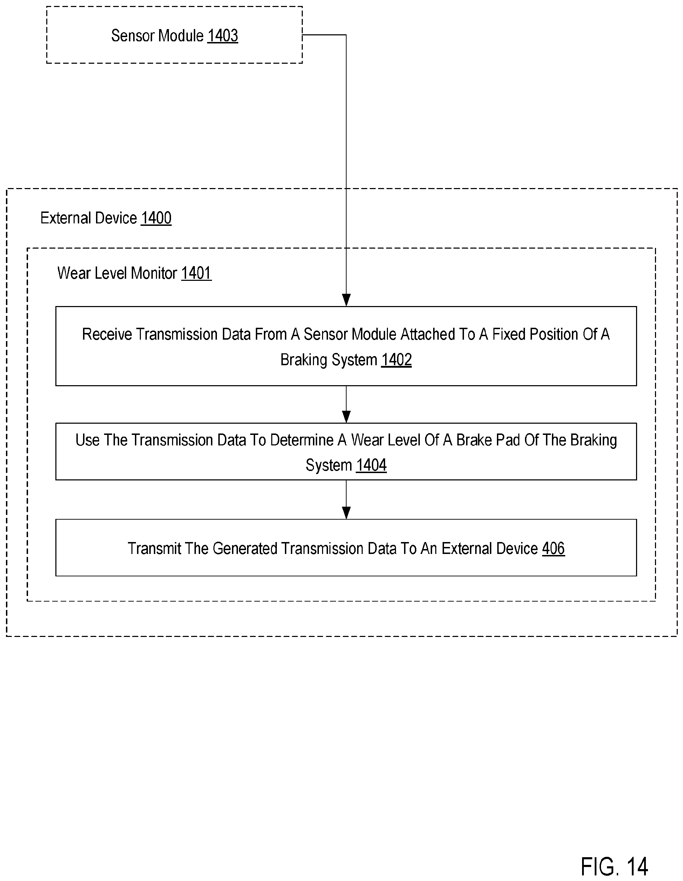

For further explanation, FIG. 14 sets forth a flowchart of an example method for brake pad wear level monitoring in accordance with at least one embodiment not falling within the scope of the present invention. The method of FIG. 14 includes receiving (1402), by a wear level monitor (1401) of an external device (1400), transmission data from a sensor module (1403) attached to a fixed position of a braking system. Examples of transmission data may include but are not limited to position data indicative of a relative distance between the sensor module and a sensor target attached to a brake pad; and an indication of a wear level of a brake pad. In a particular embodiment, the external device receives transmission data indicating a wear level of the brake pad. In other embodiments, the external device receives transmission data that includes raw data, such as position data, and the external device uses the transmission data to identify a wear level of the brake pad.

In addition, the method of FIG. 14 also includes using (1404), by the wear level monitor (1401), the transmission data to determine a wear level of a brake pad of the braking system. Using (1404), by the wear level monitor (1401), the transmission data to determine a wear level of a brake pad of the braking system may be carried out by retrieving from the transmission data, an indication of the wear level of the brake pad and using the indication to determine the wear level of the brake pad. In another embodiment, the wear level monitor may convert or modify position data within the transmission data to determine a wear level of the brake pad.

In a particular embodiment, the wear level monitor may receive temperature transmission data from the sensor module and use the temperature transmission data to determine and report to a user, a temperature of a fixed position of the braking system.

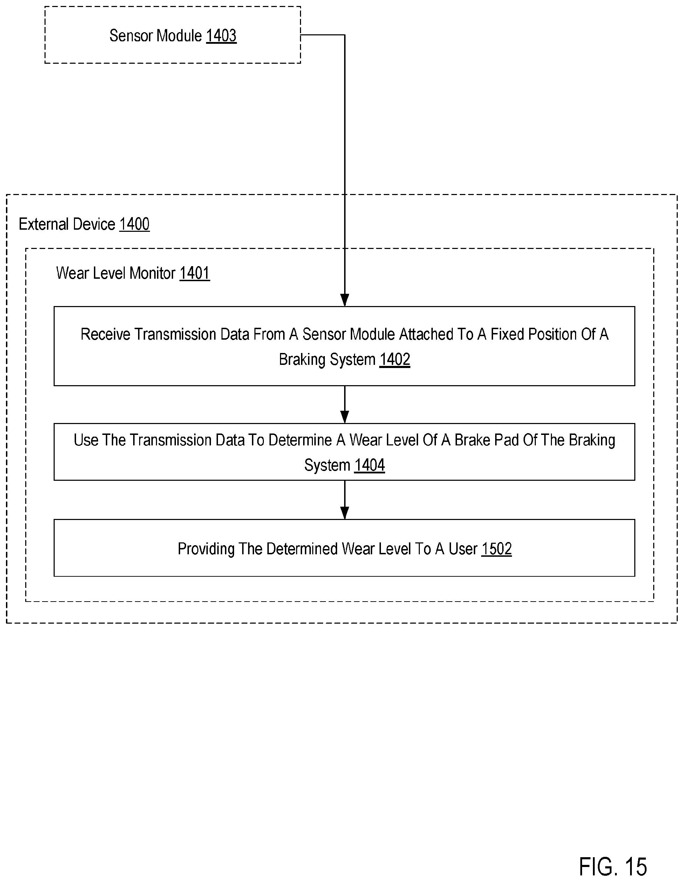

For further explanation, FIG. 15 sets forth a flowchart of an example method for brake pad wear level monitoring in accordance with at least one embodiment not falling within the scope of the present invention. The method of FIG. 15 includes elements of FIG. 14. In addition, the method of FIG. 15 includes providing (1502), by the wear level monitor (1401), the determined wear level to a user. Providing (1502), by the wear level monitor (1401), the determined wear level to a user may be carried out by displaying the determined wear level on a screen of the external device; and transmitting the determined wear level to another device that is accessible by the user.

In view of the explanations set forth above, readers will recognize that the benefits of brake pad wear level monitoring according to embodiments of the present invention include, but are not limited to:
- The brake pad wear level monitoring sensor is battery operated;
- Eliminates costly wire harness for power and communication;
- Provides continuous position measurements via a wireless transmission to a detached receiver;
- Fully 'non-contacting' operation which eliminates wear interfaces (extending life of sensor) and does not induce external forces onto brake system;
- Easy integration into applications where position measurement is required or desired, especially in fixed caliper systems;
- Sensor is non-consumable, such that sensor assembly is removable and can be re-used after brake pads, or caliper components, have been serviced and/or replaced;
- Smart RF transmission capability for extended battery life (customizable transmission protocols and frequencies (e.g. 433.92 / 315 MHz RKE, Bluetooth Low Energy (BLE), Thread protocol etc.) based on application requirements); and
- Extended life expectancy of the sensor.

Exemplary embodiments not falling within the scope of the present invention are described largely in the context of a fully functional computer system for brake pad wear level monitoring. Readers of skill in the art will recognize, however, that the present invention also may be embodied in a computer program product disposed upon computer readable storage media for use with any suitable data processing system. Such computer readable storage media may be any storage medium for machine-readable information, including magnetic media, optical media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps of the method of the invention as embodied in a computer program product. Persons skilled in the art will recognize also that, although some of the exemplary embodiments described in this specification are oriented to software installed and executing on computer hardware, nevertheless, alternative embodiments implemented as firmware or as hardware are well within the scope of the present invention.

The present invention is an apparatus as defined in claim 1 and a method as defined in claim 5. Further embodiments not falling within the scope of the invention relate to a computer program product. The computer program product may include a computer readable storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatuses, or other devices to cause a series of operational steps to be performed on the computer, other programmable apparatuses or other devices to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, apparatuses, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While particular combinations of various functions and features of the one or more embodiments are expressly described herein, other combinations of these features and functions are likewise possible within the scope of the appended claims. The present invention is not limited by the particular examples disclosed herein but only within the scope of the appended claims.

## Claims

1. An apparatus for brake pad wear level monitoring, the apparatus including:
a sensor module (200, 300, 401) attached to a caliper body/housing (106) of a braking system, the sensor module configured to:
generate data indicative of a relative distance between the sensor module (200, 300, 401) and a sensor target (280) attached to a brake pad (104, 105), including:
sensing, by a magneto resistive sense element (501) of the sensor module (200, 300, 401), a magnetic field strength of a magnet of the sensor target (280) attached to the brake pad (104, 105); and
generating, by the sense element (501), a signal indicating the sensed magnetic field strength;
use the generated data to generate transmission data including:
using the generated data to determine a wear level of the brake pad (104, 105); and
including within the generated transmission data, an indication of the determined wear level of the brake pad (104, 105); and
transmit the generated transmission data to an external device (350).

2. The apparatus of claim 1 wherein using the generated data to generate transmission data includes using the generated signal to generate the transmission data.

3. The apparatus of any one of claims 1 to 2 wherein the sensor target (280) is configured for attaching to a brake pad backing plate of the brake pad (104, 105).

4. The apparatus of any one of claims 1 to 3 wherein the sensor module is further configured to:
generate, by a temperature sensor of the sensor module, temperature data for the fixed portion of the braking system;
use the temperature data to generate a temperature transmission data; and
transmit the temperature transmission data.

5. A method of brake pad wear level monitoring, the method comprising:
generating, by a sensor module (200, 300, 401) attached to a caliper body/housing (106) of a braking system, data indicative of a relative distance between the sensor module and a sensor target attached to a brake pad including:
sensing, by a magneto resistive sense element (501) of the sensor module (401), a magnetic field strength of a magnet of the sensor target attached to the brake pad; and
generating, by the sense element (501), a signal indicating the sensed magnetic field strength; and
using, by the sensor module, the generated data to determine a wear level of the brake pad (104, 105).

6. The method of claim 5 wherein using the generated data to determine a wear level of the brake pad includes:
using, by a processor of the sensor module, the signal to determine the wear level of the brake pad.

7. The method of any one of claims 5 to 6 wherein the sensor target is configured for attaching to a brake pad backing plate of the brake pad; or further comprising:
generating a wear level value indicating the determined wear level of the brake pad; and
wirelessly transmitting, by the sensor module, the generated wear level value to an external device.

## Patentansprüche

1. Vorrichtung zur Bremsbelagverschleißgradüberwachung, wobei die Vorrichtung Folgendes einschließt:
ein Sensormodul (200, 300, 401), das an einem Bremssattelkörper/-gehäuse (106) eines Bremssystems angebracht ist, wobei das Sensormodul zu Folgendem konfiguriert ist:
Erzeugen von Daten, die einen relativen Abstand zwischen dem Sensormodul (200, 300, 401) und einem an einem Bremsbelag (104, 105) angebrachten Sensorziel (280) angeben, einschließlich:
Erfassen einer Magnetfeldstärke eines Magneten des an dem Bremsbelag (104, 105) angebrachten Sensorziels (280) durch ein magnetoresistives Erfassungselement (501) des Sensormoduls (200, 300, 401); und
Erzeugen eines Signals, das die Stärke des erfassten Magnetfelds angibt, durch das Erfassungselement (501);
Verwenden der erzeugten Daten zum Erzeugen von Übertragungsdaten, einschließlich:
Verwenden der erzeugten Daten zum Bestimmen eines Verschleißgrads des Bremsbelags (104, 105); und
Einschließen einer Angabe des bestimmten Verschleißgrads des Bremsbelags in den erzeugten Übertragungsdaten (104, 105); und
Übertragen der erzeugten Übertragungsdaten an eine externe Einrichtung (350).

2. Vorrichtung nach Anspruch 1, wobei Verwenden der erzeugten Daten zum Erzeugen von Übertragungsdaten Verwenden des erzeugten Signals zum Erzeugen der Übertragungsdaten einschließt.

3. Vorrichtung nach einem der Ansprüche 1 oder 2, wobei das Sensorziel (280) zum Anbringen an einer Bremsbelagträgerplatte des Bremsbelags (104, 105) konfiguriert ist.

4. Vorrichtung nach einem der Ansprüche 1 bis 3, wobei das Sensormodul ferner zu Folgendem konfiguriert ist:
Erzeugen von Temperaturdaten für den fixierten Abschnitt des Bremssystems durch einen Temperatursensor des Sensormoduls;
Verwenden der Temperaturdaten zum Erzeugen von Temperaturübertragungsdaten; und
Übertragen der Temperaturübertragungsdaten.

5. Verfahren zur Bremsbelagverschleißgradüberwachung, wobei das Verfahren Folgendes umfasst:
Erzeugen von Daten, die einen relativen Abstand zwischen dem Sensormodul und einem an einem Bremsbelag angebrachten Sensorziel angeben, durch ein Sensormodul (200, 300, 401), das an einem Bremssattelkörper/-gehäuse (106) eines Bremssystems angebracht ist, einschließlich:
Erfassen einer Magnetfeldstärke eines Magneten des an dem Bremsbelag angebrachten Sensorziels durch ein magnetoresistives Erfassungselement (501) des Sensormoduls (401); und
Erzeugen eines Signals, das die Stärke des erfassten Magnetfelds angibt, durch das Erfassungselement (501); und
Verwenden der erzeugten Daten durch das Sensormodul zum Bestimmen eines Verschleißgrads des Bremsbelags (104, 105).

6. Verfahren nach Anspruch 5, wobei Verwenden der erzeugten Daten zum Bestimmen des Verschleißgrads des Bremsbelags Folgendes einschließt:
Verwenden des Signals zum Bestimmen des Verschleißgrads des Bremsbelags durch einen Prozessor des Sensormoduls.

7. Verfahren nach einem der Ansprüche 5 bis 6, wobei das Sensorziel zum Anbringen an einer Bremsbelagträgerplatte des Bremsbelags konfiguriert ist; oder ferner umfassend:
Erzeugen eines Verschleißgradwerts, der den bestimmten Verschleißgrad des Bremsbelags angibt; und
drahtloses Übertragen des erzeugten Verschleißwerts durch das Sensormodul an eine externe Einrichtung.

## Revendications

1. Appareil de surveillance du niveau d'usure de plaquette de frein, l'appareil comprenant :
un module de capteur (200, 300, 401) fixé sur un corps/boîtier d'étrier (106) d'un système de freinage, le module de capteur étant configuré pour :
générer des données représentatives d'une distance relative entre le module de capteur (200, 300, 401) et une cible de capteur (280) fixée à une plaquette de frein (104, 105), comprenant :
la détection, par un élément de détection magnétorésistif (501) du module de capteur (200, 300, 401), d'une intensité de champ magnétique d'un aimant de la cible de capteur (280) fixée à la plaquette de frein (104, 105) ; et
la génération, par l'élément de détection (501), d'un signal indiquant l'intensité de champ magnétique détectée ;
utiliser les données générées pour produire des données de transmission, comprenant :
utiliser les données générées pour déterminer un niveau d'usure de la plaquette de frein (104, 105) ; et
inclure, dans les données de transmission générées, une indication du niveau d'usure déterminé de la plaquette de frein (104, 105) ; et
transmettre les données de transmission générées vers un dispositif externe (350).

2. Appareil selon la revendication 1, dans lequel l'utilisation des données générées pour produire des données de transmission comprend l'utilisation du signal généré pour produire les données de transmission.

3. Appareil selon l'une quelconque des revendications 1 à 2, dans lequel la cible de capteur (280) est configurée pour être fixée sur une plaque de support de la plaquette de frein (104, 105).

4. Appareil selon l'une quelconque des revendications 1 à 3, dans lequel le module de capteur est en outre configuré pour :
générer, au moyen d'un capteur de température du module de capteur, des données de température pour la partie fixe du système de freinage ;
utiliser les données de température pour produire des données de transmission de température ; et
transmettre les données de transmission de température.

5. Procédé de surveillance du niveau d'usure de plaquette de frein, le procédé comprenant :
la génération, par un module de capteur (200, 300, 401) fixé sur un corps/boîtier d'étrier (106) d'un système de freinage, de données représentatives d'une distance relative entre le module de capteur et une cible de capteur fixée à une plaquette de frein, comprenant :
la détection, par un élément de détection magnétorésistif (501) du module de capteur (401), d'une intensité de champ magnétique d'un aimant de la cible de capteur fixée à la plaquette de frein ; et
la génération, par l'élément de détection (501), d'un signal indiquant l'intensité de champ magnétique détectée ; et
l'utilisation, par le module de capteur, des données générées pour déterminer un niveau d'usure de la plaquette de frein (104, 105).

6. Procédé selon la revendication 5, dans lequel l'utilisation des données générées pour déterminer un niveau d'usure de la plaquette de frein comprend :
l'utilisation, par un processeur du module de capteur, du signal pour déterminer le niveau d'usure de la plaquette de frein.

7. Procédé selon l'une quelconque des revendications 5 à 6, dans lequel la cible de capteur est configurée pour être fixée sur une plaque de support de la plaquette de frein ; ou comprenant en outre :
la génération d'une valeur de niveau d'usure indiquant le niveau d'usure déterminé de la plaquette de frein ; et
la transmission sans fil, par le module de capteur, de la valeur de niveau d'usure générée vers un dispositif externe.
